# EUROPEAN PATENT APPLICATION

(11) **EP 4 481 981 A1**
(43) Date of publication of application: **25.12.2024**
(21) Application number: 23210038.8
(22) Date of filing: 15.11.2023
(51) Int. Cl.: H02J 7/00, H01M 10/44

(54) **MULTI-CHARGE-PUMP CHARGING METHOD AND APPARATUS, AND TERMINAL**

(30) Priority: 21.06.2023 CN 202310749505
(71) Applicant: Beijing Xiaomi Mobile Software Co., Ltd., Beijing 100085 (CN)
(72) Inventor: JIANG, Fei, Beijing 100085 (CN)
(74) Representative: Dehns Germany Partnerschaft mbB

(57) **Abstract**

The present disclosure relates to a multi-charge-pump charging method and apparatus, and a terminal. The method includes: obtaining (S102) a temperature of each one of temperature zones in a terminal, where each one of the temperature zones includes a charging associated device, and the charging associated device is a charge pump or a battery; determining (S104) for each one of the temperature zones, based on the temperature of the temperature zone, a maximum charging current allowed by the charging associated device in the temperature zone; and determining (S 106) from multiple charge pumps of the terminal, based on the maximum charging current allowed by each one of charging associated devices, a target charge pump to be used, and configuring (S 106) the target charge pump for charging.

## Description

### TECHNICAL FIELD

The present disclosure relates to the field of charging technology, and in particular relates to a multi-charge-pump charging method and apparatus, and a terminal.

### BACKGROUND

With the development of fast charging technology, the charging power of terminals such as mobile phones, tablets, and smart bracelets is gradually increasing, and the charging speed is getting faster and faster. Currently, the known charging power ranges from 18W to 240W. At present, high-power fast charging schemes on the market are basically based on charge pumps. In order to improve the charging power, the number of the charge pumps in the terminal is increasing. For example, when a terminal uses one charge pump, the charging power can reach 30W, and when the terminal uses two charge pumps, the charging power can reach 120W.

At the same time, the increase in the charging power also causes an increase in the degree of heat generation of the terminal, which makes the speed of charging often limited by the terminal's heat dissipation and shell temperature experience.

### SUMMARY

The present disclosure provides a multi-charge-pump charging method and apparatus, and a terminal, which can effectively utilize the charging performance of the charge pump in the terminal, improve the charging efficiency, and enhance the fast-charging experience. According to a first aspect of the present disclosure, a multi-charge-pump charging method is provided. The method includes obtaining a temperature of each one of temperature zones in a terminal, where each one of the temperature zones includes a charging associated device, and the charging associated device is a charge pump or a battery, determining for each one of the temperature zones, based on the temperature of the temperature zone, a maximum charging current allowed by the charging associated device in the temperature zone, and determining from multiple charge pumps of the terminal, based on the maximum charging current allowed by each one of charging associated devices, a target charge pump to be used, and configuring the target charge pump for charging.

In conjunction with any of the embodiments provided in the present disclosure, the determining for each one of the temperature zones, based on the temperature of the temperature zone, the maximum charging current allowed by the charging associated device in the temperature zone includes determining for each one of the temperature zones, based on the temperature of the temperature zone and a working state of a heating device in the temperature zone, the maximum charging current allowed by the charging associated device in the temperature zone, where the heating device is a device that generates heat in the working state.

In conjunction with any of the embodiments provided in the present disclosure, the heating device includes at least one of:
a camera;
a central processing unit (CPU); or
a wireless network communication (Wi-Fi) chip.

In conjunction with any of the embodiments provided in the present disclosure, the determining from the multiple charge pumps of the terminal, based on the maximum charging current allowed by each one of the charging associated devices, the target charge pump to be used, and configuring the target charge pump for charging includes, when the maximum charging current allowed by the battery is not less than a charge pump turning on threshold, calculating, based on the maximum charging current allowed by each one of the charge pumps, maximum theoretical currents of turning on different numbers of charge pumps respectively, where the maximum theoretical current is a maximum value, when the different numbers of charge pumps are turned on, of a total current of all charge pumps that are turned on for charging the battery, comparing the maximum charging current allowed by the battery with the maximum theoretical currents of turning on the different numbers of charge pumps, determining, in response to a presence of a maximum theoretical current being greater than the maximum charging current allowed by the battery, a maximum value of a number of charge pumps, for being turned on, corresponding to the maximum theoretical current greater than the maximum charging current allowed by the battery as a target number, and configuring the target charge pump of the target number for charging, where the target charge pump is a charge pump corresponding to a maximum charging current of the target number that is the largest among the maximum charging currents allowed by the multiple charge pumps.

In conjunction with any of the embodiments provided in the present disclosure, the comparing the maximum charging current allowed by the battery with the maximum theoretical currents of turning on the different numbers of charge pumps includes comparing, based on numbers of charge pumps for being turned on, from highest to lowest, the maximum charging current allowed by the battery with the maximum theoretical currents of turning on the different numbers of charge pumps, the determining, in response to the presence of a maximum theoretical current being greater than the maximum charging current allowed by the battery, the maximum value of the number of charge pumps, for being turned on, corresponding to the maximum theoretical current greater than the maximum charging current allowed by the battery as the target number includes, in response to the presence of a maximum theoretical current being greater than the maximum charging current allowed by the battery, terminating the comparing, and determining the number of charge pumps, for being turned on, corresponding to the maximum theoretical current greater than the maximum charging current allowed by the battery as the target number.

In conjunction with any of the embodiments provided in the present disclosure, the method further includes, in response to the maximum theoretical currents of turning on the different numbers of charge pumps being less than the maximum charging current allowed by the battery, selecting a maximum value among the maximum theoretical currents of turning on the different numbers of charge pumps, and determining a number of charge pumps, for being turned on, corresponding to the maximum value as the target number.

In conjunction with any of the embodiments provided in the present disclosure, the charging associated device further includes a power management chip, and the determining from the multiple charge pumps of the terminal, based on the maximum charging current allowed by each one of charging associated devices, the target charge pump to be used, and configuring the target charge pump for charging further includes, when the maximum charging current allowed by the battery is less than a charge pump turning on threshold, not turning on the charge pump, and configuring the power management chip for charging.

According to a second aspect of the present disclosure, a multi-charge-pump charging apparatus is provided. The apparatus includes a temperature obtaining module, configured to obtain a temperature of each one of temperature zones in a terminal, where each one of the temperature zones includes a charging associated device, and the charging associated device is a charge pump or a battery, a current calculating module, configured to determine for each one of the temperature zones, based on the temperature of the temperature zone, a maximum charging current allowed by the charging associated device in the temperature zone, and a charge pump configuring module, configured to: determine from multiple charge pumps of the terminal, based on the maximum charging current allowed by each one of charging associated devices, a target charge pump to be used, and configure the target charge pump for charging.

According to a third aspect of the present disclosure, a non-transitory computer-readable storage medium is provided. The non-transitory computer-readable storage medium stores a computer program. The computer program, when executed by a processor, implements steps of any one of the multi-charge-pump charging methods described in the first aspect. According to a fourth aspect of the present disclosure, a terminal is provided. The terminal includes a processor and a memory that is configured to store an executable instruction executable by the processor. The processor is configured to execute the executable instruction to implement steps of any one of the multi-charge-pump charging methods described in the first aspect.

The technical solutions provided by the embodiments of the present disclosure may include the following beneficial effects.

For a terminal provided with multiple charge pumps, the terminal is divided, according to a hardware layout in the terminal, into multiple temperature zones containing the charging associated device. Based on the temperature of each one of the temperature zones, the maximum charging current allowed by the charging associated device in the corresponding temperature zone is calculated. The charge pumps are controlled to turn on and off and are enabled for charging in accordance with the above. The charging strategy of the balanced temperature control for multiple temperature zones is achieved, which can avoid charging in areas with high temperatures, and can perform charging in areas with low temperatures, equalizing the heat generation of the terminal during the charging process, maximizing the performance of the charging hardware and enhancing the charging speed while maintaining the shell temperature experience of the terminal.

It should be understood that the above general description and the following detailed description are merely exemplary and explanatory, and do not limit the present disclosure.

### BRIEF DESCRIPTION OF THE DRAWINGS

The accompanying drawings herein, which are incorporated into and form a part of the specification, illustrate embodiments consistent with the present disclosure and are used in conjunction with the specification to explain the principles of the present disclosure.
FIG. 1 is a flowchart of a multi-charge-pump charging method illustrated according to an embodiment of the present disclosure;
FIG. 2 is a flowchart of another multi-charge-pump charging method illustrated according to an embodiment of the present disclosure;
FIG. 3 is a schematic diagram of a temperature zone division illustrated according to an embodiment of the present disclosure;
FIG. 4 is a block diagram of a multi-charge-pump charging apparatus illustrated according to an embodiment of the present disclosure;
FIG. 5 is a schematic structural diagram of a terminal illustrated according to an embodiment of the present disclosure.

### DETAILED DESCRIPTION

Embodiments are described herein in detail, examples of which are represented in the accompanying drawings. When the following description relates to the accompanying drawings, the same numerals in different accompanying drawings indicate the same or similar elements unless otherwise indicated. The implementations described in the following embodiments do not represent all implementations consistent with the present disclosure. Rather, they are only examples of apparatus and methods consistent with some aspects of the present disclosure as detailed in the appended claims.

The terms used in the present disclosure are only used for the purpose of describing particular embodiments and are not intended to limit the present disclosure. The singular forms of "a", "the" and "this" as used in the present disclosure and the appended claims are also intended to include the majority form, unless the context clearly indicates other meanings. It should also be understood that the term "and/or" as used herein refers to and includes any or all possible combinations of one or more of the associated listed items.

It should be understood that while the terms first, second, third, etc. may be used in the present disclosure to describe various types of information, such information should not be limited to these terms. These terms are only used to distinguish the same type of information from one another. For example, without departing from the scope of the present disclosure, the first information may also be referred to as the second information, and similarly, the second information may also be referred to as the first information. Depending on the context, as used herein, the phrase "if' may be interpreted as "at ......", "when ......" or "in response to determining".

Currently, in order to control the temperature of the terminal during charging, an overall fitting temperature control strategy is adopted, which limits the overall magnitude of the charging current based on the maximum shell temperature fitted to the entire terminal, achieving the purpose of controlling the shell temperature. However, there are still some areas with very low temperatures in the terminal where the charge pump can still charge with high current. This method does not give full play to the charging performance, resulting in a low charging speed. Current charging methods control the charging current by controlling the maximum shell temperature fitted to the entire machine in order to ensure the shell temperature experience. For example, assuming that the terminal is divided into five zones ABCDE, the fitted maximum shell temperature needs to be controlled not to exceed 41°, where the temperature of zone E is 40.5°, and the temperature of zone A is 35°. According to the overall fitting temperature control strategy, in order to make the fitted maximum shell temperature of the terminal not to exceed 41°, the restricted overall charging current may be relatively small. And in fact, due to the lower temperature of zone A, the charge pump in zone A can still charge with high power. It can be seen that this method does not give full play to the performance of the charging hardware, and the user charging experience is not good.

Based on this, the present disclosure provides a multi-charge-pump charging method and apparatus, and a terminal, which can effectively utilize the charging performance of the charge pump in the terminal, improve the charging efficiency, and enhance the fast-charging experience. At least one embodiment of the present disclosure proposes a multi-charge-pump charging method, which is able to give fuller play to the charging performance of the terminal hardware, and extremely control the shell temperature to improve the user experience.

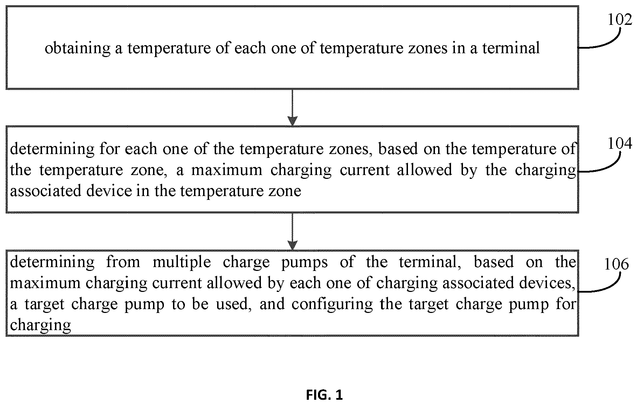

As shown in FIG. 1, FIG. 1 is a flowchart of a multi-charge-pump charging method illustrated according to at least one embodiment of the present disclosure, which may be applied to a terminal provided with multiple charge pumps such as a cell phone and a tablet. The method includes the following steps 102 to 106.

At step S102, a temperature of each one of temperature zones in a terminal is obtained.

In this embodiment, each one of the temperature zones includes a charging associated device, and the charging associated device is a charge pump or a battery. The charge pump charges the battery when the charge pump is in a charging working state. The temperature zones are obtained by pre-dividing the terminal according to the distribution of hardware devices in the terminal. For example, the terminal is divided according to the location of the charge-associated devices, and each charge-associated device is separately assigned to a temperature zone. The temperature zones may be separated by the presence of gaps, or may be immediately adj acent to each other without gaps.

In an example, considering that the battery is a charging associated device with a particularly large area and a particularly large heating influence, the temperature zones adjacent to the temperature zone in which the battery is located may contain a portion of the battery area, in order to enable the calculation of temperatures of these temperature zones to take the heating influence of the battery into account as well, and make the temperature calculation of the temperature zones be more accurate.

In order to realize the balanced temperature control for multiple zones of the terminal, in this step, compared to the overall fitting temperature control strategy, the fitted maximum shell temperature of the entire machine is no longer obtained, and the temperatures of the fitted maximum shell temperatures of the individual temperature zones are obtained separately.

In this step, for each of the temperature zones in the terminal, the temperature of at least one sampling point in the temperature zone is collected, and if there is one sampling point corresponding to the temperature zone, the temperature of the sampling point is determined as the temperature of its corresponding temperature zone, and if there are multiple sampling points corresponding to the temperature zone, the temperature of the temperature zone may be determined based on the result of weighted summation of the temperatures of the multiple sampling points, where the weights may be determined comprehensively by the locations of the sampling points and the experimental data. In addition, based on the data of the actual experiment, a compensation coefficient may be added to the temperature of the temperature zone determined above to make the fitted temperature of the temperature zone closer to the actual temperature of the temperature zone.

At step 104, for each one of the temperature zones, a maximum charging current allowed by the charging associated device in the temperature zone is determined based on the temperature of the temperature zone.

In addition to the influence of external environmental factors and the operating state of the terminal, the temperature increase of the temperature zone is mainly caused by the heat generation of the charging associated device therein, and the degree of the heat generation of the charging associated device is positively correlated with the charging current of the charging associated device. Therefore, the charging current of the charging associated device may be restricted according to the current temperature of the temperature zone to avoid the temperature of the temperature zone from rising to a maximum shell temperature.

In this embodiment, the maximum charging current allowed by the charging associated device is the maximum charging current after the charging associated device is restricted in order to keep the temperature of the temperature zone below the maximum shell temperature.

If the charging current during working of the charging associated device exceeds the maximum charging current, the temperature of the temperature zone in which the charging associated device is located will exceed the maximum shell temperature, and the temperature zone will generate heat significantly, which will bring a bad experience for the user.

In this embodiment, for each one of the temperature zones, a mapping relationship between different temperatures of the temperature zone and the maximum charging current allowed by the charging associated device in the temperature zone may be obtained through experimental debugging in advance. In this step, the maximum charging current allowed by the charging associated device in the temperature zone may be obtained, according to the mapping relationship, by matching the current temperature of the temperature zone.

In other embodiments, for this step, the maximum charging current allowed by the charging-associated device in the temperature zone may also be calculated from the current temperature of the temperature zone by constructing a mathematical model or a neural network model.

At step 106, a target charge pump to be used is determined from multiple charge pumps of the terminal based on the maximum charging current allowed by each one of charging associated devices, and the target charge pump is configured for charging.

In this step, the target charge pump to be used may be determined from the multiple charge pumps based on the maximum charging current allowed by each one of the charge pumps and the maximum charging current allowed by the battery. This embodiment does not limit the manner in which the target charge pump is determined.

In an example, when the maximum charging current allowed by one or some charge pumps is below a threshold or a certain proportion of the maximum charging current allowed by the battery, the one or some charge pumps are not to be used, and other charge pumps are determined as the target charge pump for charging. For example, if there are three parallel charge pumps in the terminal and one battery, with the threshold of 1A, and among the maximum charging currents allowed by the three charge pumps, there is one temperature zone where the maximum charging current allowed by the charge pump is only 0.5A, while the maximum charging current allowed by the charge pump in the other temperature zones is 2A and the maximum charging current allowed by the battery is 5A, then the two charge pumps with the maximum charging current of 2A are determined as the target charge pumps, and the charge pump with the maximum charging current of only 0.5A is not to be used to ensure high current charging for the battery without overheating the temperature zone.

In yet another example, maximum theoretical charging currents corresponding to turning on different numbers of charge pumps may be calculated and compared with the maximum charging current allowed by the battery. The charge pump, whose number is the number of charge pumps that are turned on corresponding to the maximum theoretical current that is capable of matching the maximum charging current allowed by the battery is determined as the target charge pump, so as to allow the battery to be charged at the maximum charging current without causing the temperature zone to overheat.

In the multi-charge-pump charging method of the present embodiment, for a terminal provided with multiple charge pumps, the terminal is divided, according to a hardware layout in the terminal, into multiple temperature zones containing the charging associated device. Based on the temperature of each one of the temperature zones, the maximum charging current allowed by the charging associated device in the corresponding temperature zone is calculated. The charge pumps are controlled to turn on and off and are enabled for charging in accordance with the above. The charging strategy of the balanced temperature control for multiple temperature zones is achieved, which can avoid charging in areas with high temperatures, and can perform charging in areas with low temperatures, equalizing the heat generation of the terminal during the charging process, maximizing the performance of the charging hardware and enhancing the charging speed while maintaining the shell temperature experience of the terminal.

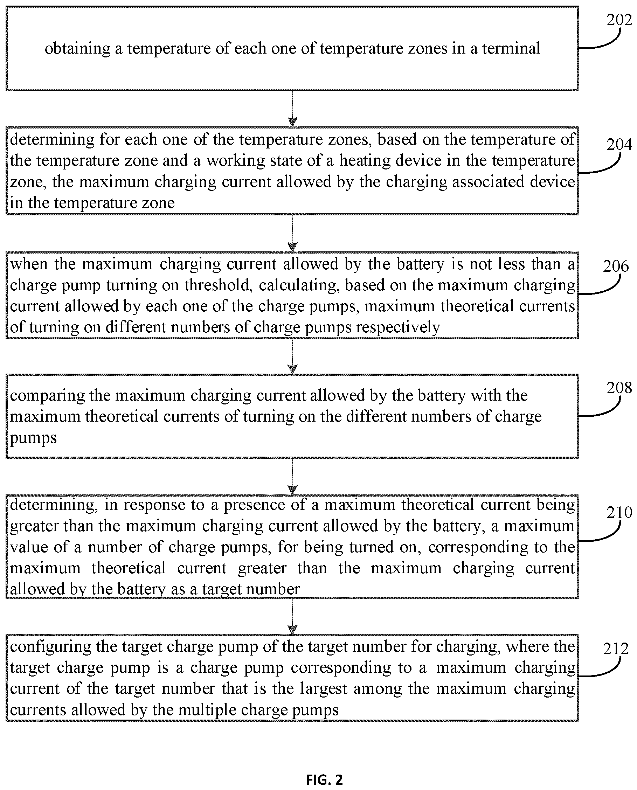

As shown in FIG. 2, FIG. 2 is a flowchart of another multi-charge-pump charging method illustrated according to at least one embodiment of the present disclosure, which may include the following steps 202 to 212.

At step 202, a temperature of each one of the temperature zones in the terminal is obtained. The temperature zones are obtained by pre-dividing the terminal according to the distribution of hardware devices in the terminal. In order to carry out more accurate temperature zoning control, the hardware devices include, in addition to the charging associated devices, a heating device. The heating device is a device that generates heat in the working state other than the charging associated devices. For example, the heating device may be a sensor, a communication module, a chip of various functions, etc., in the terminal.

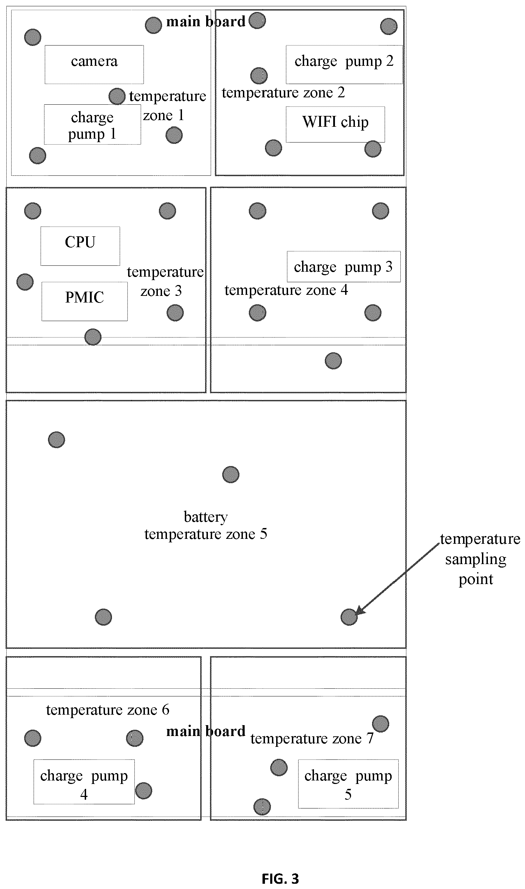

The steps of this embodiment are described below in conjunction with FIG. 3. FIG. 3 illustrates a schematic diagram of a temperature zone division based on the distribution of the main hardware printed circuit board (PCB) of a cell phone. The PCB includes a main board above and a small board below, and is divided into a total of seven temperature zones.

The temperature zone 1 mainly contains a charge pump 1 and a camera module; the temperature zone 2 mainly contains a charge pump 2 and a wireless network communication (Wi-Fi) chip; the temperature zone 3 mainly contains a central processing unit (CPU) chip, a power management IC (PMIC) and a little bit area of the upper left half portion of the battery; the temperature zone 4 mainly contains a charge pump 3 and a little bit area of the upper right half portion of the battery; the temperature zone 5 mainly contains a central area of the battery; the temperature zone 6 mainly contains a little bit area of the lower left portion of the battery and a charge pump 4 in the small board; the temperature zone 7 mainly contains a little bit area of the lower right portion of the battery and a charge pump 5 in the small board.

The circles in FIG. 3 are temperature sampling points.

In this embodiment, the charging associated devices are the charge pump, the battery, and the PMIC.

In this step, according to the multiple temperature sampling points in the PCB, the maximum temperature of the shell temperature of each temperature zone is fitted respectively to obtain the temperature of each one of the temperature zones.

The maximum temperature of the shell temperature of each temperature zone may be equal to the comprehensive weighting of the temperature of each temperature sampling point, where the weighting coefficient A and the compensation coefficient B are obtained by fitting according to the actual experimental data combined with the location of the temperature sampling points. It is shown as follows:
the maximum shell temperature T₁ of the temperature zone 1: T₁ = A₁₋₁*T₁₋₁ + A₁₋₂*T₁₋₂ + A₁₋₃*T₁₋₃ + A₁₋₄*T₁₋₄ + A₁₋₅*T₁₋₅ + B_{1;}
the maximum shell temperature T₂ of the temperature zone 2: T₂ = A₂₋₁*T₂₋₁ + A₂₋₂*T₂₋₂ + A₂₋₃*T₂₋₃ + A₂₋₄*T₂₋₄ + A₂₋₅*T₂₋₅ + B₂;
the maximum shell temperature T₃ of the temperature zone 3: T₃ = A₃₋₁*T₃₋₁ + A₃₋₂*T₃₋₂ + A₃₋₃*T₃₋₃ + A₃₋₄*T₃₋₄ + A₃₋₅*T₃₋₅ + B₃;
the maximum shell temperature T₄ of the temperature zone 4: T₄ = A₄₋₁*T₄₋₁ + A₄₋₂*T₄₋₂ + A₄₋₃*T₄₋₃ + A₄₋₄*T₄₋₄ + A₄₋₅*T₄₋₅ + B₄;
the maximum shell temperature T₅ of the temperature zone 5: T₅ = A₅₋₁*T₅₋₁ + A₅₋₂*T₅₋₂ + A₅₋₃*T₅₋₃ + A₅₋₄*T₅₋₄ + B₅,
the maximum shell temperature T₆ of the temperature zone 6: T₆ = A₆₋₁*T₆₋₁ + A₆₋₂*T₆₋₂ + A₆₋₃*T₆₋₃ + B₆;
the maximum shell temperature T₇ of the temperature zone 7: T₇ = A₇₋₁*T₇₋₁ + A₇₋₂*T₇₋₂ + A₇₋₃*T₇₋₃ + B₇;
where i in Aᵢ₋ⱼ, Bi, and Tᵢ₋ⱼ indicates the temperature zone i, and j indicates the jth temperature sampling point in the temperature zone i.

At step 204, for each one of the temperature zones, the maximum charging current allowed by the charging associated device in the temperature zone is determined based on the temperature of the temperature zone and a working state of a heating device in the temperature zone.

In addition to the influence of external environmental factors, the temperature increase of the temperature zone is mainly caused by the heat generation of the charging associated device and the heating device therein, the degree of the heat generation of the charging associated device is positively correlated with the charging current of the charging associated device, and the heat generation of the heating device is correlated with the operating state of the terminal or the working state of the heating device. Therefore, the charging current of the charging associated device may be restricted according to the current temperature of the temperature zone and the working state of the heating device in the temperature zone, so as to avoid the temperature of the temperature zone from rising to the maximum shell temperature. In addition to the charging associated device, there are many heating devices that generate heat when they are in a working state. In this embodiment, the influence of the heating device with a larger degree of heat generation on the temperature of the temperature zones may be considered, and the heating device with a larger degree of heat generation in each temperature zone may include any one of the following: a camera, a CPU, or a Wi-Fi chip. In this embodiment, the relationship among the temperature of each temperature zone, the charging current of the charging associated device and the working state of the heating device may be analyzed, debugged, tested, and fed back in advance based on the PCB layout of the terminal.

The temperature T1 of the temperature zone 1 is influenced by the following factors: the working mode or working state of the camera, and the charging current of the charge pump 1. The temperature T2 of the temperature zone 2 is influenced by the following factors: the working state of the Wi-Fi chip, and the charging current of the charge pump 2.

The temperature T3 of the temperature zone 3 is influenced by the following factors: the working state of the CPU, the charging current of the PMIC, and the charging current of the battery.

The temperature T4 of the temperature zone 4 is influenced by the following factors: the charging current of the charge pump 3, and the charging current of the battery.

The temperature T5 of the temperature zone 5 is influenced by the following factor: the charging current of the battery.

The temperature T6 of the temperature zone 6 is influenced by the following factors: the charging current of the charge pump 4, and the charging current of the battery.

The temperature T7 of the temperature zone 7 is influenced by the following factors: the charging current of the charge pump 5, and the charging current of the battery.

Then, for each one of the temperature zones, the mapping relationship among different temperatures of the temperature zone, the maximum charging current allowed by the charging associated device in the temperature zone and the working state of the heating device may be obtained through experimental debugging in advance. It is shown as follows:
the maximum charging current I_{cp1} allowed by the charge pump 1: I_{cp1} = function1(T₁, State_{camera});
the maximum charging current I_{cp2} allowed by the charge pump 2: I_{cp2} = function2(T₂, State_{Wi-Fi});
the maximum charging current I_{cp3} allowed by the charge pump 3: I_{cp3} = function3(T₄);
the maximum charging current I_{cp4} allowed by the charge pump 4: I_{cp4} = function4(T₆);
the maximum charging current I_{cp5} allowed by the charge pump 5: I_{cp5} = function5(T₇);
the maximum charging current I_{pmic} allowed by the PMIC: I_{pmic} = function6(T₃, State_{CPU});
the maximum charging current I_{bat} allowed by the battery: I_{bat} = function7(Ts);
where State_{camera} indicates the working state of the camera, State_{Wi-Fi} indicates the working state of the Wi-Fi chip, and State_{CPU} indicates the working state of the CPU.

The specific debugging of the function may be carried out according to the actual characteristics of each temperature zone, and the following Table 1 shows the mapping relationship, in equation function1, among the temperature T1 of the temperature zone 1, the maximum charging current allowed by the charge pump 1, and the working state of the camera, where the camera module is defined to have three kinds of working states: S0 is the turned off state, S1 is the photo-taking state, and S2 is the photographic state.

**Table 1**

| | state S0 of the camera | state S1 of the camera | state S2 of the camera |
|---|---|---|---|
| T₁ <= 34°C | 10A | 10A | 10A |
| 34°C<T₁<= 35°C | 10A | 9A | 8A |
| 35°C<T₁<= 36°C | 8A | 6A | 5A |
| 36°C<T₁<= 37°C | 6A | 4A | 3A |
| 37°C<T₁ <=38°C | 4A | 3A | 2A |
| 38°C<T₁ <= 39°C | 3A | 2A | 0 |
| 39°C<T₁ <= 40°C | 2A | 0 | 0 |
| T₁> 40°C | 0 | 0 | 0 |

Finally, in this step, the maximum charging current allowed by the charge-associated device in the temperature zone can be obtained by matching the current temperature of the temperature zone and the working state of the heating device according to the mapping relationship.

For example, if the current temperature of the temperature zone 1 is 34.5°C and the camera is in the photo-taking state S1, the maximum charging current for the operation of the charge pump 1 may be matched to 9A according to Table 1.

At step 206, when the maximum charging current allowed by the battery is not less than a charge pump turning on threshold, maximum theoretical currents of turning on different numbers of charge pumps are calculated respectively based on the maximum charging current allowed by each one of the charge pumps.

When the charging current of the charge pumps is lower than the charge pump turning on threshold, a protection interruption may be triggered and the charge pumps cannot be turned on. Therefore, the determination of the target charge pump is started in the case that the maximum charging current allowed by the battery is not less than the charge pump turning on threshold.

In other embodiments, when the maximum charging current allowed by the battery is less than the charge pump turning on threshold, the charge pump is not to be turned on, and the power management chip is configured for charging.

The charge pump turning on threshold may be 2A, and when I_{bat} is less than 2A, the charge pump cannot be turned on, and the battery is charged by the PMIC with a small current. The PMIC may be configured to charge the battery according to the smallest value among I_{bat} and I_{pmic}. When I_{bat} is greater than 2A, the subsequent judgment is continued.

In this embodiment, the maximum theoretical current is a maximum value, when the different numbers of charge pumps are turned on, of a total current of all charge pumps that are turned on for charging the battery. Specifically, the maximum theoretical current is the maximum current value that can be provided to the battery when a plurality of charge pumps are turned on for charging at the same time. In other words, it is the highest value that can be achieved out of the total currents generated during the charging of the battery by all the charge pumps that have been turned on.

In this embodiment, an architecture of multiple charge pumps in parallel is used, and the charging current of each of the charge pumps that have been turned on when charging the battery is ideally the same. The maximum theoretical current of turning on a different number of charge pumps is the product of the same charging current of each of the turned-on charge pumps and the number of the turned-on charge pumps, and a charge pump that has been turned on may be referred to as a turned-on charge pump. The same charging current is the lowest value of the maximum charging currents allowed by the turned-on charge pumps corresponding to the number of the turned-on charge pumps, so that the turned-on charge pumps are all able to charge by using that same charging current without overheating the temperature zone.

The turned-on charge pumps are the charge pumps, with a number being the number of the turned-on charge pumps, corresponding to the largest maximum charging currents among the maximum charging currents allowed by the charge pumps described above. Alternatively, the maximum charging currents with a number being the number of the turned-on charge pumps are selected, from a plurality of the maximum charging currents based on the current values of the maximum charging currents from the highest to the lowest, and the charge pumps corresponding to the selected maximum charging currents are determined as the turned-on charge pumps.

The manner of calculating the maximum theoretical currents of turning on different numbers of charge pumps respectively is explained below in connection with the example of FIG. 3. The maximum theoretical current Iₒ₅= 5* (the minimum value of I_{cp1}, I_{cp2}, I_{cp3}, I_{cp4}, I_{cp5}) when all five charge pumps are turned on. The maximum theoretical current Iₒ₄= 4* (the second smallest value of I_{cp1}, I_{cp2}, I_{cp3}, I_{cp4}, I_{cp5}) when four charge pumps are turned on. The maximum theoretical current Iₒ₃= 3* (the middle value of I_{cp1}, I_{cp2}, I_{cp3}, I_{cp4}, I_{cp5}) when three charge pumps are turned on. The maximum theoretical current Iₒ₂= 2* (the second largest value of I_{cp1}, I_{cp2}, I_{cp3}, I_{cp4}, I_{cp5}) when two charge pumps are turned on. The maximum theoretical current Iₒ₁= 1*(the maximum value of I_{cp1}, I_{cp2}, I_{cp3}, I_{cp4}, I_{cp5}) when one charge pump is turned on.

For example, the minimum value is 1A, Iₒ₅=5A; the second smallest value is 2A, Iₒ₄=8A; the middle value is 3A, Iₒ₃=9A; the second largest value is 3.5A, Iₒ₂=7A; and the maximum value is 4A, Iₒ₁=4A.

It should be noted that the embodiments of the present disclosure are illustrated with an example of one battery to be charged in the terminal. In other examples, there may be a plurality of batteries to be charged in the terminal, and each battery corresponds to multiple charge pumps. For each of the batteries, the configuring of the target charge pump of the battery may be carried out in the manner of the embodiments of the present disclosure.

At step 208, the maximum charging current allowed by the battery is compared with the maximum theoretical currents of turning on the different numbers of charge pumps.

At step 210, in response to a presence of a maximum theoretical current being greater than the maximum charging current allowed by the battery, a maximum value of a number of charge pumps, that are turned on, corresponding to the maximum theoretical current greater than the maximum charging current allowed by the battery is determined as a target number. In this embodiment, the maximum charging current at which the battery operates may be compared with each of the maximum theoretical currents of turning on the different numbers of charge pumps. When there is one maximum theoretical current greater than the maximum charging current allowed by the battery, the number of charge pumps that are turned on corresponding to that maximum theoretical current is determined as the target number. When there is more than one maximum theoretical current greater than the maximum charging current allowed by the battery, the maximum value is selected from numbers of charge pumps, that are turned on, corresponding to those maximum theoretical currents, and the selected maximum value is determined as the target number, causing that the number of charge pumps to be used for charging is as large as possible and the charging current is as large as possible to equalize the temperature of each temperature zone.

In an example, it is also possible to compare, based on numbers of charge pumps that are turned on, from highest to lowest, the maximum charging current allowed by the battery with the maximum theoretical currents of turning on the different numbers of charge pumps. In response to the presence of a maximum theoretical current being greater than the maximum charging current allowed by the battery, the comparing is terminated, and the number of charge pumps, that are turned on, corresponding to the maximum theoretical current greater than the maximum charging current allowed by the battery is determined as the target number.

For example, the magnitudes of Iₒ₅, Iₒ₄, Iₒ₃, Iₒ₂, Iₒ₁ are compared with I_{bat} sequentially. If a value greater than I_{bat} occurs, the comparing is terminated and the charge pumps with a target number corresponding to that value are configured for charging, e.g., if Iₒ₅ is greater than or equal to I_{bat}, five charge pumps are configured for charging.

Since the comparing is conducted based on numbers of charge pumps that are turned on from highest to lowest, when the presence of a maximum theoretical current greater than the maximum charging current allowed by the battery is found in the comparing, the number of charge pumps that are turned on corresponding to that maximum theoretical current is the largest number.

At step 212, the target charge pump of the target number is configured for charging. The target charge pump is the charge pump corresponding to a maximum charging current of the target number that is the largest among the maximum charging currents allowed by the multiple charge pumps.

After determining the target number, the process continues with determining the target charge pump corresponding to the target number. For example, when the target number is 3, the target charge pumps are the three charge pumps corresponding to the largest three maximum charging currents among the maximum charging currents allowed by the multiple charge pumps.

It should be noted that when configuring the target charge pump for charging, the charging current used by the target charge pump is not the maximum theoretical current because the maximum theoretical current is a value greater than the maximum charging current allowed by the battery, and the comparison using the maximum theoretical current is to find the maximum target number of charge pumps that can be used to configure charging, causing that the target charge pumps used to share the charging current are as many as possible, reducing the temperature increase tendency of the temperature zone in which each target charge pump is located. The charging current of the target charge pump needs to be calculated separately based on the current charging situation of the battery. For example, the charging current of the target charge pump may be obtained by dividing the maximum charging current allowed by the battery by the target number.

In other embodiments, in response to the maximum theoretical currents of turning on the different numbers of charge pumps being less than the maximum charging current allowed by the battery, a maximum value is selected among the maximum theoretical currents of turning on the different numbers of charge pumps, and a number of charge pumps, that are turned on, corresponding to the maximum value is determined as the target number.

In the case where the maximum theoretical currents are all less than the maximum charging current allowed by the battery, it is indicated that at this point there is no possibility of being able to charge in accordance with the maximum charging current allowed by the charge pump. In order to maximize the charging current, the maximum value is selected among the maximum theoretical currents of turning on the different numbers of charge pumps, and a number of charge pumps, that are turned on, corresponding to the maximum value is determined as the target number.

For example, if Iₒ₅, Iₒ₄, Iₒ₃, Iₒ₂, and Iₒ₁ are all less than I_{bat}, the maximum value of Iₒ₅, Iₒ₄, Iₒ₃, Iₒ₂, and Iₒ₁ is selected, for example, the maximum value is Iₒ₃, and three charge pumps allowing for the maximum charging current are configured to charge.

In the original entire machine fitting scheme, when the temperature zone 1 reaches 40°, the charging current of the battery may be restricted to be less than 2A and fast charging may be terminated. In contrast, in the technical solutions of the embodiments of the present disclosure, when the temperature zone 1 reaches 40°, charge pumps 2, 3, 4, and 5 can continue to be used for charging and fast charging.

In the multi-charge-pump charging method of the embodiments of the present disclosure, on the one hand, for a high-power fast charging project with multiple charge pumps, the terminal is divided into multiple temperature zones according to the distribution of the charging power devices and the heating devices in the terminal; for each one of the temperature zones, the maximum charging current allowed by the charging associated device in the corresponding temperature zone is calculated based on the temperature of the temperature zone and the working state of the heating device, and accordingly, the target number of charge pumps used for charging is determined, and the target charge pumps used for charging are controlled. By refining the heat generation of each zone of the terminal, the charging strategy of the balanced temperature control for multiple temperature zones is achieved, which can avoid charging in areas with high temperatures, and can perform charging in areas with low temperatures, equalizing the heat generation of the terminal during the charging process, extremely controlling the shell temperature, and maximizing the charge pumps for charging as many as possible, maximizing the charging current as much as possible, maximizing the performance of the charging hardware, optimizing the charging performance, and enhancing the charging speed while maintaining the shell temperature experience of the terminal.

On the other hand, since the temperature of the charge pump rises faster, the number of charge pumps used for charging in the current fast charging project is limited, generally less than or equal to 2, and individually 3. Moreover, the individual charge pumps are turned on and off sequentially during charging. When there are 3 charge pumps, it is ensured that the charge pumps are turned on sequentially, and there will not be a situation in which the front charge pump is turned on and the back charge pump is turned off. In the technical solutions of the present disclosure, by dividing the temperature zones according to the distribution of hardware circuits, the relationship among each temperature zone, the charging current of the charge pump, and the heating device is fitted; the charging configuration is optimized according to the temperature of each temperature zone, achieving adaptive configuration of the number of charge pumps that are turned on during charging. Therefore, more charge pumps can be set up in the terminal, breaking through the limitation on the number of charge pumps in the current technology, and the charging power can be further enhanced.

For each of the foregoing method embodiments, for the sake of simplicity of description, they are all expressed as a series of combinations of actions, but those skilled in the art should be aware that the present disclosure is not limited by the order of the described actions, as certain steps may be performed in other orders or simultaneously according to the present disclosure.

Secondly, those skilled in the art should also be aware that the embodiments described in the specification are all optional embodiments, and the actions and modules involved are not necessarily necessary for the present disclosure.

Corresponding to the foregoing embodiments of application function realization methods, the present disclosure also provides embodiments of application function realization apparatus and corresponding terminals.

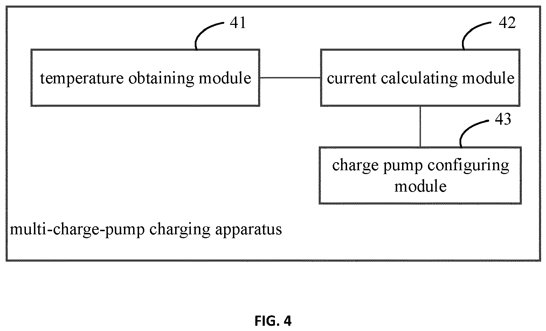

Referring to FIG. 4, a block diagram of a multi-charge-pump charging apparatus illustrated according to an embodiment of the present disclosure is shown. The apparatus includes a temperature obtaining module 41, configured to obtain a temperature of each one of temperature zones in a terminal, where each one of the temperature zones includes a charging associated device, and the charging associated device is a charge pump or a battery. The apparatus can further include a current calculating module 42, configured to determine for each one of the temperature zones, based on the temperature of the temperature zone, a maximum charging current allowed by the charging associated device in the temperature zone, and a charge pump configuring module 43, configured to: determine from multiple charge pumps of the terminal, based on the maximum charging current allowed by each one of charging associated devices, a target charge pump to be used, and configure the target charge pump for charging.

In an embodiment, the current calculating module 42 is specifically configured to determine for each one of the temperature zones, based on the temperature of the temperature zone and a working state of a heating device in the temperature zone, the maximum charging current allowed by the charging associated device in the temperature zone, where the heating device is a device that generates heat in the working state.

In an embodiment, the heating device includes at least one of:
a camera;
a central processing unit (CPU); or
a wireless network communication (Wi-Fi) chip.

In an embodiment, the charge pump configuring module 43 is specifically configured to, when the maximum charging current allowed by the battery is not less than a charge pump turning on threshold, calculate, based on the maximum charging current allowed by each one of the charge pumps, maximum theoretical currents of turning on different numbers of charge pumps respectively, where the maximum theoretical current is a maximum value, when the different numbers of charge pumps are turned on, of a total current of all charge pumps that are turned on for charging the battery, and compare the maximum charging current allowed by the battery with the maximum theoretical currents of turning on the different numbers of charge pumps. The charge pump configuring module 43 can further be configured to determine, in response to a presence of a maximum theoretical current being greater than the maximum charging current allowed by the battery, a maximum value of a number of charge pumps, that are turned on, corresponding to the maximum theoretical current greater than the maximum charging current allowed by the battery as a target number and configure the target charge pump of the target number for charging, where the target charge pump is a charge pump corresponding to a maximum charging current of the target number that is the largest among the maximum charging currents allowed by the multiple charge pumps.

In an embodiment, the charge pump configuring module 43 is specifically configured to compare, based on numbers of charge pumps that are turned on, from highest to lowest, the maximum charging current allowed by the battery with the maximum theoretical currents of turning on the different numbers of charge pumps, and, in response to the presence of a maximum theoretical current being greater than the maximum charging current allowed by the battery, terminate the comparing, and determine the number of charge pumps, that are turned on, corresponding to the maximum theoretical current greater than the maximum charging current allowed by the battery as the target number.

In an embodiment, the charge pump configuring module 43 is further configured to, in response to the maximum theoretical currents of turning on the different numbers of charge pumps being less than the maximum charging current allowed by the battery, select a maximum value among the maximum theoretical currents of turning on the different numbers of charge pumps, and determine a number of charge pumps, that are turned on, corresponding to the maximum value as the target number.

In an embodiment, the charging associated device further includes a power management chip, and the charge pump configuring module 43 is further configured to:
when the maximum charging current allowed by the battery is less than a charge pump turning on threshold, not turn on the charge pump, and configure the power management chip for charging.

For the apparatus embodiments, since they substantially correspond to the method embodiments, it is sufficient to refer to the partial description of the method embodiments where relevant. The above-described apparatus embodiments are merely schematic, where the units described above as illustrated as separated components may or may not be physically separated, and the components shown as units may or may not be physical units, i.e., they may be located in one place or they may be distributed to multiple network units. Some or all of these modules can be selected to fulfill the purpose of the technical solutions of the present disclosure according to actual needs. It can be understood and implemented by those ordinary skilled in the art without creative labor.

Correspondingly, the embodiments of the present disclosure provide, on the other hand, a terminal including a processor and a memory configured to store an executable instruction executable by the processor. The processor is configured to execute the executable instruction to implement any one of the multi-charge-pump charging methods described above.

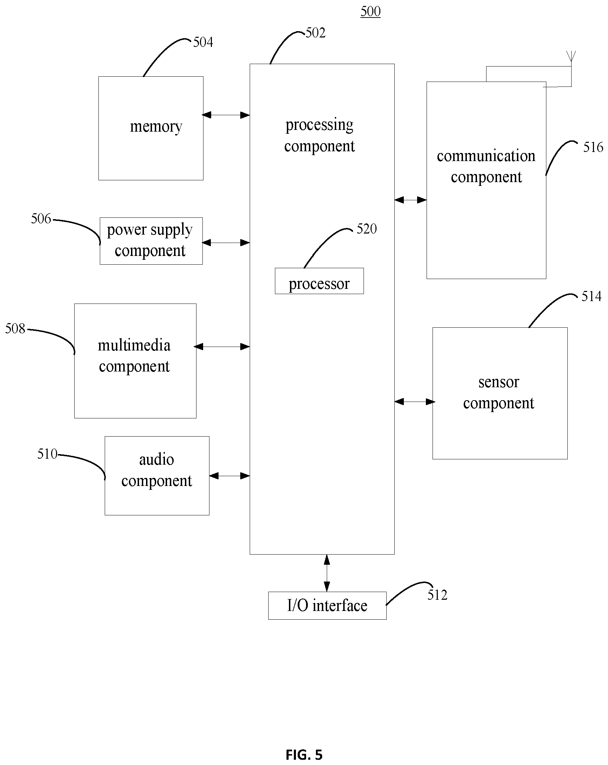

FIG. 5 is a schematic structural diagram of a terminal 500 illustrated according to an embodiment. For example, the terminal 500 may be a user device, which may be specifically a cell phone, a computer, a digital broadcasting terminal, a message transceiver device, a gaming console, a tablet device, a medical device, a fitness device, a personal digital assistant, a wearable device such as a smartwatch, smart glasses, a smart bracelet, a smart running shoe, and the like.

Referring to FIG. 5, the terminal 500 may include one or more of the following components: a processing component 502, a memory 504, a power supply component 506, a multimedia component 508, an audio component 510, an input/output (I/O) interface 512, a sensor component 514, and a communication component 516.

The processing component 502 generally controls the overall operation of the terminal 500, such as operations associated with display, telephone calls, data communication, camera operations, and recording operations. The processing component 502 may include one or more processors 520 to execute an instruction to complete all or some of the steps of the methods described above. In addition, the processing component 502 may include one or more modules that facilitate interaction between the processing component 502 and other components. For example, the processing component 502 may include a multimedia module to facilitate interaction between the multimedia component 508 and the processing component 502.

The memory 504 is configured to store various types of data to support the operations at the terminal 500. Examples of such data include the following for any application or method to operate on the terminal 500: instructions, contact data, phonebook data, messages, pictures, videos, etc. The memory 504 may be implemented by any type of volatile or non-volatile storage device or a combination thereof, such as a static random access memory (SRAM), electrically erasable programmable read-only memory (EEPROM), erasable programmable read-only memory (EPROM), programmable read-only memory (PROM), read-only memory (ROM), magnetic memory, flash memory, disk or CD-ROM.

The power supply component 506 supplies power to various components of the terminal 500. The power supply component 506 may include a power supply management system, one or more power supplies, and other components associated with generating, managing, and distributing power for the terminal 500.

The multimedia component 508 includes a screen that provides an output interface between the terminal 500 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe action. In some embodiments, the multimedia component 508 includes a front-facing camera and/or a rear-facing camera. The front-facing camera and/or the rear-facing camera may receive external multimedia data when the terminal 500 is in an operating mode, such as a shooting mode or a video mode. Each of the front-facing camera and the rear-facing camera may be a fixed optical lens system or have a focal length and optical zoom capability.

The audio component 510 is configured to output and/or input audio signals. For example, the audio component 510 includes a microphone (MIC), configured to receive external audio signals when the terminal 500 is in an operating mode, such as a calling mode, a recording mode, and a voice recognition mode. The received audio signals may be further stored in the memory 504 or sent via the communication component 516. In some embodiments, the audio component 510 further includes a speaker for outputting the audio signals.

The I/O interface 512 provides an interface between the processing component 502 and a peripheral interface module, and the peripheral interface module may be a keypad, a click wheel, a button, etc. These buttons may include, but are not limited to, a home button, a volume button, a start button, and a lock button.

The sensor component 514 includes one or more sensors, configured to provide a status assessment of various aspects of the terminal 500. For example, the sensor component 514 may detect an open/closed state of the terminal 500, relative positioning of the components, for example, the components are the display and keypad of the terminal 500, the sensor component 514 may also detect a change in the position of the terminal 500 or a change in the position of one component of the terminal 500, the presence or absence of user contact with the terminal 500, the orientation or acceleration/deceleration of the terminal 500, and temperature changes of the terminal 500. The sensor component 514 may include a proximity sensor, configured to detect the presence of nearby objects in the absence of any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate the communication between the terminal 500 and other devices by wired or wireless means. The terminal 500 may access a wireless network based on any communication standard, such as Wi-Fi, 2G, 3G, 4G LTE, 5G NR or a combination thereof. In an embodiment, the communication component 516 receives broadcast signals or broadcast-related information from an external broadcast management system via a broadcast channel. In an embodiment, the communication component 516 further includes a near-field communication (NFC) module to facilitate short-range communication. For example, the NFC module may be implemented based on a radio frequency identification (RFID) technology, infrared data association (IrDA) technology, ultra-wideband (UWB) technology, bluetooth (BT) technology, and the like.

In an embodiment, the terminal 500 may be implemented by one or more of: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic element, to perform the above methods.

In an embodiment, a non-transitory computer-readable storage medium is provided, such as a memory 504 including an instruction. The instruction in the storage medium, when executed by the processor 520 of the terminal 500, enables the terminal 500 to perform any one of the multi-charge-pump charging methods described above.

The non-transitory computer-readable storage medium may be a ROM, a random access memory (RAM), a CD-ROM, a magnetic tape, a floppy disk, an optical data storage device, etc.

After considering the specification and practicing the embodiments disclosed herein, those skilled in the art will easily come up with other implementation solutions of the present disclosure. The present disclosure is intended to cover any variations, uses, or adaptive changes of the present disclosure, which follow the general principles of the present disclosure and include common knowledge or commonly used technical means in the technical field that are not disclosed in the present disclosure. The specification and embodiments are only considered to be illustrative, and the true scope and spirit of the present disclosure are indicated by the following claims.

It should be understood that the present disclosure is not limited to the precise structure which has been described above and illustrated in the accompanying drawings, and that various modifications and alterations may be made without departing from the scope of the invention as defined by the claims.

## Claims

1. A multi-charge-pump charging method, **characterized in** comprising:
obtaining (S102), by a terminal, a temperature of each one of temperature zones in the terminal, wherein each one of the temperature zones comprises a charging associated device, and the charging associated device comprises a charge pump or a battery;
determining (S104), by the terminal for each one of the temperature zones, based on the temperature of the temperature zone, a maximum charging current allowed by the charging associated device in the temperature zone; and
determining (S106), by the terminal from multiple charge pumps of the terminal, based on the maximum charging current allowed by each one of charging associated devices, a target charge pump to be used, and configuring (S106) the target charge pump for charging.

2. The method according to claim 1, wherein the determining (S104) for each one of the temperature zones the maximum charging current allowed by the charging associated device in the temperature zone comprises:
determining (S204) for each one of the temperature zones, based on the temperature of the temperature zone and a working state of a heating device in the temperature zone, the maximum charging current allowed by the charging associated device in the temperature zone, wherein the heating device is a device that generates heat in the working state.

3. The method according to claim 2, wherein the heating device comprises at least one of:
a camera;
a central processing unit, CPU; or
a wireless network communication chip.

4. The method according to any preceding claim, wherein the determining (S106) the target charge pump to be used comprises:
in response to the maximum charging current allowed by the battery being not less than a charge pump turning on threshold, calculating (S206), based on the maximum charging current allowed by each one of the charge pumps, maximum theoretical currents of turning on different numbers of charge pumps, wherein the maximum theoretical current is a maximum value of a total current of all charge pumps for being turned on for charging the battery;
comparing (S208) the maximum charging current allowed by the battery with the maximum theoretical currents of turning on the different numbers of charge pumps; and
determining (S210), in response to at least one of the maximum theoretical currents being greater than the maximum charging current allowed by the battery, a maximum value of a number of charge pumps, for being turned on, corresponding to the maximum theoretical current greater than the maximum charging current allowed by the battery as a target number of the target charge pump; and
the configuring (S106) the target charge pump for charging comprises:
configuring (S212) the target charge pump of the target number for charging, wherein a maximum charging current allowed by the target charge pump of the target number is greater than a maximum charging current allowed by a charge pump, other than the target charge pump of the target number, of the multiple charge pumps.

5. The method according to claim 4, wherein the comparing (S208) the maximum charging current allowed by the battery with the maximum theoretical currents of turning on the different numbers of charge pumps comprises:
comparing, based on numbers of charge pumps for being turned on, from highest to lowest, the maximum charging current allowed by the battery with the maximum theoretical currents of turning on the different numbers of charge pumps;
the determining (S210) the maximum value of the number of charge pumps, for being turned on, corresponding to the maximum theoretical current greater than the maximum charging current allowed by the battery as the target number of the target charge pump comprises:
in response to a maximum theoretical current being greater than the maximum charging current allowed by the battery, terminating the comparing, and determining the number of charge pumps, for being turned on, corresponding to the maximum theoretical current greater than the maximum charging current allowed by the battery as the target number of the target charge pump.

6. The method according to claim 4, further comprising:
in response to the maximum theoretical currents of turning on the different numbers of charge pumps being less than the maximum charging current allowed by the battery, selecting a maximum value among the maximum theoretical currents of turning on the different numbers of charge pumps, and determining a number of charge pumps, for being turned on, corresponding to the maximum value as the target number of the target charge pump.

7. The method according to any preceding claim, wherein the charging associated device comprises a power management chip, and the method further comprises:
in response to the maximum charging current allowed by the battery being less than a charge pump turning on threshold, not turning on the charge pump, and configuring the power management chip for charging.

8. A multi-charge-pump charging apparatus, **characterized in** comprising:
a temperature obtaining module (41), configured to obtain a temperature of each one of temperature zones in a terminal, wherein each one of the temperature zones comprises a charging associated device, and the charging associated device comprises a charge pump or a battery;
a current calculating module (42), configured to determine for each one of the temperature zones, based on the temperature of the temperature zone, a maximum charging current allowed by the charging associated device in the temperature zone; and
a charge pump configuring module (43), configured to: determine from multiple charge pumps of the terminal, based on the maximum charging current allowed by each one of charging associated devices, a target charge pump to be used, and configure the target charge pump for charging.

9. The apparatus according to claim 8, wherein the current calculating module (42) is specifically configured to:
determine for each one of the temperature zones, based on the temperature of the temperature zone and a working state of a heating device in the temperature zone, the maximum charging current allowed by the charging associated device in the temperature zone, wherein the heating device is a device that generates heat in the working state.

10. The apparatus according to claim 9, wherein the heating device comprises at least one of:
a camera;
a central processing unit, CPU; or
a wireless network communication chip.

11. The apparatus according to claim 8, wherein the charge pump configuring module (43) is specifically configured to:
in response to the maximum charging current allowed by the battery being not less than a charge pump turning on threshold, calculate, based on the maximum charging current allowed by each one of the charge pumps, maximum theoretical currents of turning on different numbers of charge pumps, wherein the maximum theoretical current is a maximum value of a total current of all charge pumps for being turned on for charging the battery;
compare the maximum charging current allowed by the battery with the maximum theoretical currents of turning on the different numbers of charge pumps;
determine, in response to at least one of the maximum theoretical currents being greater than the maximum charging current allowed by the battery, a maximum value of a number of charge pumps, for being turned on, corresponding to the maximum theoretical current greater than the maximum charging current allowed by the battery as a target number of the target charge pump; and
configure the target charge pump of the target number for charging, wherein a maximum charging current allowed by the target charge pump of the target number is greater than a maximum charging current allowed by a charge pump, other than the target charge pump of the target number, of the multiple charge pumps.

12. The apparatus according to claim 11, wherein the charge pump configuring module (43) is specifically configured to:
compare, based on numbers of charge pumps for being turned on, from highest to lowest, the maximum charging current allowed by the battery with the maximum theoretical currents of turning on the different numbers of charge pumps; and
in response to a maximum theoretical current being greater than the maximum charging current allowed by the battery, terminate the comparing, and determine the number of charge pumps, for being turned on, corresponding to the maximum theoretical current greater than the maximum charging current allowed by the battery as the target number of the target charge pump.

13. The apparatus according to claim 11, wherein the charge pump configuring module (43) is further configured to:
in response to the maximum theoretical currents of turning on the different numbers of charge pumps being less than the maximum charging current allowed by the battery, select a maximum value among the maximum theoretical currents of turning on the different numbers of charge pumps, and determine a number of charge pumps, for being turned on, corresponding to the maximum value as the target number of the target charge pump.

14. The apparatus according to claim 8, wherein the charging associated device comprises a power management chip, and the charge pump configuring module (43) is further configured to:
in response to the maximum charging current allowed by the battery being less than a charge pump turning on threshold, not turn on the charge pump, and configure the power management chip for charging.

15. A non-transitory computer-readable storage medium, **characterized in** storing a computer program, wherein the computer program, when executed by a processor of an electronic device, enables the electronic device to implement the multi-charge-pump charging method according to any one of claims 1-7.
